# EUROPÄISCHE PATENTSCHRIFT

(11) **EP 2 362 513 B1**
(45) Veröffentlichungstag und Bekanntmachung des Hinweises auf die Patenterteilung: **06.06.2012**
(21) Anmeldenummer: 10153992.2
(22) Anmeldetag: 18.02.2010
(51) Int. Cl.: H02H 7/12, H02H 9/04

(54) **Blitzschutz für Wechselrichter**
Lightning protection for converters
Protection contre la foudre pour onduleur

(43) Veröffentlichungstag der Anmeldung: 31.08.2011
(73) Patentinhaber: SMA Solar Technology AG, 34266 Niestetal (DE)
(72) Erfinder: Falk, Andreas, 34131 Kassel (DE); Schulze Gerold, 34125 Kassel (DE)
(74) Vertreter: Rehberg, Bernhard Frank

(56) Entgegenhaltungen:
- JP-A- 2004 236 413
- KR-A- 20080 097 861
- HERNANDEZ J C ET AL: "Lightning and Surge Protection in Photovoltaic Installations" IEEE TRANSACTIONS ON POWER DELIVERY, IEEE SERVICE CENTER, NEW YORK, NY, US LNKD- DOI:10.1109/TPWRD.2008.917886, Bd. 23, Nr. 4, 1. Oktober 2008 (2008-10-01), Seiten 1961-1971, XP011225303 ISSN: 0885-8977

## Beschreibung

### TECHNISCHES GEBIET DER ERFINDUNG

Die Erfindung bezieht sich auf einen Wechselrichter mit den Merkmalen des Oberbegriffs des unabhängigen Patentanspruchs 1 sowie auf eine Solaranlage mit einem solchen Wechselrichter. Der erfindungsgemäße Wechselrichter kann aber auch in Verbindung mit anderen Gleichstrom- oder Gleichspannungsquellen Verwendung finden.

Die vorliegende Erfindung betrifft den Überspannungsschutz und insbesondere den Blitzschutz für derartige Wechselrichter. Probleme durch Überspannungen, die von Blitzen in Wechselrichtern hervorgerufen werden, treten insbesondere bei solchen Wechselrichtern auf, bei denen die angeschlossenen Gleichstrom- oder Wechselstromquellen dem Wetter exponiert und dadurch mit einer erhöhten Gefahr der Einkopplung von Blitzen verbunden sind. Dies gilt neben Photovoltaikgeneratoren insbesondere auch für Windgeneratoren.

### STAND DER TECHNIK

Bei einem bekannten Wechselrichter mit den Merkmalen des Oberbegriffs des unabhängigen Patentanspruchs 1, wie er beispielsweise von HERNANDEZ J C ET AL: "Lightning and Surge Protection in Photovoltaic Installations"IEEE TRANSACTIONS ON POWER DELIVERY, IEEE SERVICE CENTER, NEW YORK, NY, US LNKD- DOI: 10.1109/ TPWRD.2008.917886, Bd. 23, Nr. 4, 1. Oktober 2008 (2008-10-01), Seiten 1961-1971, XP011225303ISSN: 0885-8977 beschrieben wird, ist jede der beiden Eingangsleitungen des Wechselrichters über einen Varistor als Überspannungsableiter mit der geerdeten Potentialausgleichsschiene des Wechselrichters verbunden. Eine der beiden Eingangsleitungen kann darüber hinaus über einen GFDI, d. h. einen Ground Fault Detector and Interrupter, an die Potentialausgleichsschiene angeschlossen sein, um diese Eingangsleitung zwar auf Erdpotential zu legen, aber diese Erdverbindung im Falle eines Erdungsfehlers automatisch zu unterbrechen. Wenn durch einen Blitz eine Überspannung in die Eingangsleitungen dieses bekannten Wechselrichters eingekoppelt wird, fließt sie über die Varistoren zu der Potentialausgleichsschiene und von dort nach Erde ab. Soweit hierbei die Varistoren nicht überlastet werden, kehren sie nach der Ableitung der Überspannung in ihren hochohmigen Zustand zurück. Kommt es jedoch zu einer Überlastung, so werden die Varistoren bei diesem bekannten Wechselrichter dauerhaft niederohmig. Wenn die Varistoren zwischen beiden Eingangsleitungen und der Potentialausgleichsschiene überlastet werden, bedeutet dies einen unerwünschten Kurzschluss zwischen den beiden Eingangsleitungen und damit der an die Eingangsleitungen angeschlossenen Gleichstrom- und/oder Gleichspannungsquelle. Zudem besteht eine nicht geringe Wahrscheinlichkeit, dass dieser fehlerhafte Zustand nicht dazu führt, dass der GFDI fällt, weil er aufgrund des ihm parallel geschalteten, niederohmig gewordenen Varistors keinen Erdfehler bemerkt. Es ist daher bekannt, den beiden Varistoren jeweils eine Schmelzsicherung in Reihe zu schalten, was jedoch einen zusätzlichen Aufwand und entsprechend zusätzliche Kosten bedeutet. Während Varistoren häufig nicht über Einrichtungen zur Fehlermeldung verfügen, ist dies bei einem GFDI regelmäßig der Fall, so dass das Fallen eines GFDI als Indiz für einen Fehler eines Wechselrichters leicht erfasst und signalisiert werden kann. Zwischen den Eingangsleitungen des bekannten Wechselrichters ist eine nicht unerhebliche Pufferkapazität wirksam, die auch in der Lage ist, größere Ströme binnen kurzer Zeiträume aufzunehmen.

Bei einem anderen bekannten Wechselrichter sind zwischen die beiden Eingangsleitungen zwei Varistoren in Reihe geschaltet. Ihr Mittelpunkt ist über einen weiteren funkenstreckenbasierten Überspannungsableiter mit der Potentialausgleichsschiene dieses bekannten Wechselrichters verbunden. Über die beiden in Reihe geschalteten Varistoren kann ein Ausgleich von Überspannungen zwischen den beiden Eingangsleitungen erfolgen. Der Überspannungsausgleich zur geerdeten Potentialausgleichsschiene erfolgt über eine Funkenstrecke, die nach Ableitung der Überspannungen durch die wieder hochohmig werdenden Varistoren gelöscht wird. Wenn jedoch ein Varistor in Folge seiner Überlastung dauerhaft niederohmig wird, ist ein Löschen der Funkenstrecke nicht mehr sichergestellt, und bei Überlastung beider Varistoren kommt es zu einem dauerhaften Kurzschluss zwischen den Eingangsleitungen.

Zum Blitzschutz für Wechselrichter ist es auch bekannt, oberhalb eines Gehäuses des Wechselrichters Blitzfangstangen vorzusehen, die an eine Erdungsanlage angeschlossen sind. Dabei sind die Blitzfangstangen gegenüber dem Gehäuse des Wechselrichters hochspannungsisoliert, und die Leitung von den Blitzfangstangen zu der Erdungsanlage weist ebenfalls eine Hochspannungsisolierung auf. Mit dieser Hochspannungsisolierung wird der Wellenwiderstand für die von einem Blitz induzierten Ströme durch diese Leitung reduziert, damit sie möglichst schnell nach Erde abfließen können, ohne in das Wechselrichtergehäuse einzukoppeln. Allerdings besteht die nicht unerhebliche Gefahr, dass die in Folge eines Blitzes von der Erdungsanlage ausgehenden Erdströme über die Erdung der Potentialausgleichsschiene des Wechselrichters doch in den Wechselrichter einkoppeln, weil sie abhängig von der Erdimpedanz nur großflächig nach Erde abfließen können.

### AUFGABE DER ERFINDUNG

Der Erfindung liegt die Aufgabe zugrunde, einen Wechselrichter mit den Merkmalen des Oberbegriffs des unabhängigen Patentanspruchs 1 und eine unter seiner Verwendung errichtete Solaranlage aufzuzeigen, die die voranstehend geschilderten Nachteile bekannter Wechselrichter beseitigen.

### LÖSUNG

Die Aufgabe der Erfindung wird durch den Wechselrichter mit den Merkmalen des unabhängigen Patentanspruchs 1 gelöst. Bevorzugte Ausführungsformen des neuen Wechselrichters sind in den abhängigen Patentansprüchen 2 bis 12 definiert. Die abhängigen Patentansprüche 13 bis 15 definieren eine Solaranlage mit mindestens einem neuen Wechselrichter.

### BESCHREIBUNG DER ERFINDUNG

Bei dem neuen Wechselrichter ist der mindestens eine Überspannungsableiter der Überspannungsableiteinrichtung zwischen die Eingangsleitung, deren Isolation gegenüber der Potentialausgleichsschiene durch die Isolationsüberwachungseinrichtung mindestens überwacht wird, und die Potentialausgleichsschiene geschaltet, ohne dass ihm eine Sicherung in Reihe geschaltet ist, während jedem zwischen die andere Eingangsleitung und die Potenzialausgleichsschiene geschalteten Überspannungsableiter der Überspannungsableiteinrichtung, soweit dieser überhaupt vorhanden ist, durch eine in Reihe geschaltete Sicherung abgesichert ist. D. h. zwischen die andere Eingangsleitung und die Potenzialausgleichsschiene ist entweder kein Überspannungsableiter der Überspannungsableiteinrichtung geschaltet, oder er ist durch eine in Reihe geschaltete Sicherung abgesichert.

Zumindest wird bei der Erfindung daher eine Sicherung eingespart, die dem mindestens einen Überspannungsableiter der Überspannungsableiteinrichtung bislang in Reihe geschaltet wurde. Der neue Wechselrichter kommt aber häufig auch ohne jeden zwischen die andere Eingangsleitung und die Potenzialausgleichsschiene geschalteten Überspannungsableiter der Überspannungsableiteinrichtung aus. Selbst dann ist die Überspannungsableiteinrichtung des neuen Wechselrichters für Überspannungen, wie sie z. B. mit einem Blitz verbunden sein können, auch zwischen der anderen Eingangsleitung und der Potentialausgleichsschiene wirksam. Das Frequenzspektrum derartiger Überspannungen liegt so hoch, dass die zwischen den Eingangsleitungen des Wechselrichters in üblicher Weise wirksame Pufferkapazität für Ströme, die von den Überspannungen mit denselben Frequenzen hervorgerufen werden, nur einen sehr geringen Wechselstromwiderstand zwischen den beiden Eingangsleitungen darstellt. Überspannungen auf der anderen Eingangsleitung des neuen Wechselrichters können daher durch Ströme von der einen Eingangsleitung über die dazwischen wirksame Pufferkapazität ausgeglichen werden. Resultierende Überspannungen auf dieser einen Eingangsleitung können dann über den oder die Überspannungsableiter der Überspannungsableiteinrichtung zwischen der einen Eingangsleitung und der Potentialausgleichsschiene abfließen. Im Ergebnis kommt die Überspannungsableiteinrichtung mit weniger Überspannungsableitern aus. Konkret kann sie ausschließlich parallel geschaltete Überspannungsableiter umfassen oder sogar nicht mehr als einen, d. h. einen einzigen Überspannungsableiter aufweisen zwischen die eine Eingangsleitung und die Potentialausgleichsschiene geschaltet ist. Grundsätzlich können aber auch mehrere Überspannungsableiter, z. B. zwischen die eine Eingangsleitung und die Potentialausgleichsschiene in Reihe geschaltet werden, um z. B. die im Normalbetrieb von jedem Überspannungsableiter zu tragende Spannung zu reduzieren, was die Verwendung kleinerer und kostengünstigerer Überspannungsableiter ermöglicht. Der Vorteil der vorliegenden Erfindung beschränkt sich aber nicht nur auf die Einsparung von Überspannungsableitern ohne Funktionsverlust. Vielmehr ist die Funktionalität bzw. die Funktionssicherheit des neuen Wechselrichters sogar erhöht, indem seine Isolationsüberwachungseinrichtung sicher anspricht, wenn der oder die Überspannungsableiter der Überspannungsableiteinrichtung niederohmig werden, weil diese Niederohmigkeit zwischen der einen Eingangsleitung und der Potentialausgleichsschiene gegeben ist und damit wie ein Erd- oder Isolationsfehler dieser überwachten Eingangsleitung wirkt. So wird der Überspannungsableitfall zuverlässig registriert und kann die notwendigen Überprüfungsroutinen auslösen.

Bei dem neuen Wechselrichter ist es auch möglich, zwischen die jeweils andere Eingangsleitung und die Potentialschiene einen oder selbst mehrere Überspannungsableiter zu schalten, die dann aber immer mit einer Sicherung, wie beispielsweise einer Schmelzsicherung oder einem Sicherungsautomaten, in Reihe zu schalten sind. Dies gilt unabhängig davon, ob nur die eine Eingangsleitung oder beide Eingangsleitungen von der Isolationsüberwachungseinrichtung des Wechselrichters bezüglich ihrer Isolation gegenüber der Potentialschiene überwacht wird/werden. Mit einem solchen zusätzlichen, mit einer Sicherung in Reihe geschalteten Überspannungsableiter zwischen der anderen Eingangsleitung und der Potentialschiene wird ein zusätzliche Überspannungsableitweg von der anderen Eingangsleitung zu der Potentialschiene bereitgestellt. Mögliche Folgen einer Überlastung dieses zusätzlichen Überspannungsableiters werden durch die in Reihe geschaltete Sicherung verhindert oder beendet. Die Sicherung verhindert damit insbesondere auch einen Kurzschluss zwischen den Eingangsleitungen über die Gesamtheit der Überspannungsableiter der Überspannungsableiteinrichtungen und die Potentialausgleichsschiene. Selbst wenn der zusätzliche Überspannungsableiter zwischen der anderen Eingangsleitung und der Potentialausgleichsschiene infolge einer Überlastung der Sicherung abgetrennt wurde, steht über dem oben beschriebenen Mechanismus immer noch ein wesentlicher Blitzschutz für die andere Eingangsleitung zur Verfügung. Dies gilt ohne weiteres auch dann, wenn der Überspannungsableiter zwischen der einen Eingangsleitung und der Potentialausgleichsschiene infolge einer Überlastung niederohmig, d. h. leitend, geworden ist.

Vorzugsweise wird die Isolationsüberwachungseinrichtung durch einen zwischen die andere Eingangsleitung und die Potentialausgleichsschiene geschalteten GFDI ausgebildet. Durch das Fallen dieses GFDI wird sichergestellt, dass dann, wenn der oder die Überspannungsableiter zwischen der einen Eingangsleitung, an die der GFDI nicht angeschlossen ist, und der Potentialausgleichsschiene dauerhaft niederohmig werden, kein Kurzschluss zwischen den Eingangsleitungen über die Potentialausgleichsschiene bestehen bleibt. Ein GFDI verfügt überdies vielfach von vorn herein über eine integrierte Fehlersignalisiereinrichtung, die sein Fallen nach außen signalisiert.

Jeder der Überspannungsableiter der Überspannungsableiteinrichtung der neuen Wechselrichters kann ein Varistor, insbesondere ein Varistor von dem Typ sein, der bei Überlastung kontrolliert in einen niederohmigen Zustand übergeht. Grundsätzlich kann jeder Überspannungsableiter der Überspannungsableiteinrichtung des neuen Wechselrichters aber auch funkenstreckenbasiert sein. Ebenso ist es denkbar, einen Überspannungsableiter in Form eines Varistors mit einem funkenstreckenbasierten Überspannungsableiter zwischen die eine Eingangsleitung und die Potentialausgleichsschiene in Reihe zu schalten.

Der GFDI ist bei dem neuen Wechselrichter vorzugsweise mit einer Drossel in Reihe geschaltet, um ihn vor großen hochfrequenten Strömen zu schützen. Diese Drossel ist vorzugsweise als Luftdrossel ausgebildet und kann klein dimensioniert sein, da der GFDI sowieso nur für einen kleinen Strom ausgelegt ist, bevor er fällt oder auslöst.

Der GFDI ist, wie bereits angedeutet wurde, vorzugsweise an eine Fehlermeldeeinrichtung des neuen Wechselrichters angeschlossen, die sein Fallen an eine externe Überwachungseinheit meldet. Er kann zudem motorisch zurücksetzbar sei, um ihn beispielsweise nach einem Blitzschlag, der keine dauerhaften Schäden verursacht hat, auch aus der Ferne wieder in seinen leitenden Ausgangszustand zurückzuversetzen.

Wie üblich kann auch ein metallisches Gehäuse des neuen Wechselrichters an die Potentialausgleichsschiene angeschlossen sein. Nicht nur dann, sondern grundsätzlich ist es besonders bevorzugt, wenn die Potentialausgleichsschiene zur Erdung nicht nur an die mindestens eine sondern auch noch an mindestens eine weitere Erdungsanlage angeschlossen ist. Dabei ist zum Anschluss der Potentialausgleichsschiene an diese mindestens eine weitere Erdungsanlage eine hochspannungsisolierte Anschlussleitung vorgesehen, die für blitzinduzierte Ströme einen besonders niedrigen Wellenwiderstand aufweist und daher den bevorzugten Weg für derartige Ströme darstellt. Auf diese Weise ist es möglich, derartige Ableitströme über eine entfernt von dem Wechselrichter und von der an diesen angeschlossenen Gleichstrom- und/oder Gleichspannungsquelle angeordnete weitere Erdungsanlage zu leiten, so dass die von dieser weiteren Erdungsanlage abfließenden Erdströme möglichst keine Überspannungen in dem Wechselrichter und der an diesen angeschlossenen Gleichstrom- oder Gleichspannungsquelle induzieren. Es können auch mehrere hochspannungsisolierte Anschlussleitungen zum Anschließen der Potentialausgleichsschiene an mehrere weitere solche Erdungsanlagen vorgesehen sein, die vorzugsweise über die Himmelsrichtungen verteilt angeordnet sind. Sinnvoller Weise ist jede dieser Anschlussleitungen etwa 10 bis 30 m lang. Ab etwa 10 m wird ein sinnvoller Abstand zu der primären Erdungsanlage der Potentialausgleichsschiene geschaffen, damit die dort nach Erde abfließendem Ströme keinen Einfluss auf den Wechselrichter mehr haben; und ab etwa 30 m besteht die Gefahr, dass der Widerstand für den blitzinduzierten Strom zu der weiteren Erdungsanlage trotz des geringen Wellenwiderstands der hochspannungsisolierten Anschlussleitung zu groß wird, um hiermit einen bevorzugten Ableitweg für diesen Strom bereitzustellen.

Die hochspannungsisolierte Leitung ist vorzugsweise mit einer schwach leitenden Schicht an der äußeren Oberfläche ihrer Isolierung versehen, um eine Glimmentladung im Anschlussbereich zu vermeiden und um einen kleinen Wellenwiderstand sicherzustellen.

Statt der Potentialausgleichsschiene des neuen Wechselrichters kann auch mindestens eine Blitzfangstange des neuen Wechselrichters über die hochspannungsisolierte Anschlussleitung an die mindestens eine weitere Erdungsanlage angeschlossen werden, wobei dann vorzugsweise keine elektrische Kontaktierung zwischen der hochspannungsisolierten Anschlussleitung und der Potentialausgleichsschiene besteht.

Bei der neuen Solaranlage, die mindestens einen neuen Wechselrichter aufweist, sind Leitungen, die Gleichstrom von mehreren Photovoltaikgeneratoren zu den Eingangsleitungen des Wechselrichters führen, in von dem Wechselrichter entfernten Stromsammeleinrichtungen über jeweils mindestens einen Varistor als Spannungsableiter an eine geerdete Potentialausgleichsschiene der Stromsammeleinrichtung angeschlossen, wobei jeder Varistor von einem Typ ist, der bei Überlastung in einen niederohmigen Zustand übergeht, und wobei mit mindestens einem der Varistoren eine Schmelzsicherung in Reihe geschaltet ist. Die eine Schmelzsicherung ist dabei ausreichend, um selbst in dem Fall, dass alle Varistoren wegen Überlastung in ihren niederohmigen Zustand übergehen, sicherzustellen, dass kein Kurzschluss zwischen den Leitungen auftritt. Aufgrund ihrer inhärenten Trägheit behindern die Schmelzsicherungen aber nicht die Ableitung von blitzinduzierten Überspannungen von den Leitungen zu der Potentialausgleichsschiene und damit nach Erde während des Blitzereignisses.

Besonders bevorzugt ist es bei der neuen Solaranlage, wenn die den Gleichstrom paarweise führenden Leitungen über je einen Varistor an einen Zwischenpunkt angeschlossen sind, wobei die Schmelzsicherung mit mindestens einem dieser Varistoren in Reihe geschaltet ist, und wenn der Zwischenpunkt über mindestens einen weiteren Varistor an die Potentialausgleichsschiene der Stromsammeleinrichtung angeschlossen ist. Bei dieser Y-Schaltung der Varistoren liegen für alle auftretenden Spannungen immer zwei Varistoren in Reihe vor. Die im Normalbetrieb auftretenden Spannungen werden so über jeweils zwei Varistoren aufgeteilt, was den Einsatz kleiner dimensionierter und damit auch kleiner bauender und kostengünstiger verfügbarer Varistoren möglich macht.

Um für den Fall, dass die Varistoren wegen Überlastung niederohmig geworden sind, keine der den Gleichstrom führenden Leitungen dauerhaft mit der Potentialaugleichsschiene der Stromsammeleinrichtung zu verbinden, ist vorzugsweise jeweils mindestens eine Schmelzsicherung zwischen jeder der den Gleichstrom führenden Leitungen und der Potentialausgleichsschiene der Stromsammeteinrichtung mit einem der Varistoren in Reihe geschaltet.

Es versteht sich, dass die hier im Zusammenhang mit der neuen Solaranlage beschriebene Absicherung der Gleichstrom von mehreren Photovoltaikgeneratoren führenden Leitungen in einer Stromsammeleinrichtung gegenüber Blitzschlag auch unabhängig von den Merkmalen des neuen Wechselrichters in vorteilhafter Weise anwendbar ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand von Ausführungsbeispielen näher erläutert und beschrieben.
- **Fig. 1**: skizziert eine erste Ausführungsform des neuen Wechselrichters.
- **Fig. 2**: skizziert einen externen Blitzschutz für den neuen Wechselrichter.
- **Fig. 3**: skizziert eine zweite Ausführungsform des neuen Wechselrichters.
- **Fig. 4**: skizziert einen zusätzlichen Blitzschutz in einer von dem Wechselrichter entfernten Stromsammeleinrichtung für eine an den Wechselrichter angeschlossene Gleichstrom- und Gleichspannungsquelle basierend auf Photovoltaikgeneratoren in einer ersten Ausführungsform; und
- **Fig. 5**: eine zusätzliche Blitzschutzeinrichtung in einer von dem Wechselrichter entfernten Stromsammeleinrichtung für eine an den Wechselrichter angeschlossene Gleichstrom- und Gleichspannungsquelle basierend auf Photovoltaikgeneratoren in einer zweiten Ausführungsform.

### FIGURENBESCHREIBUNG

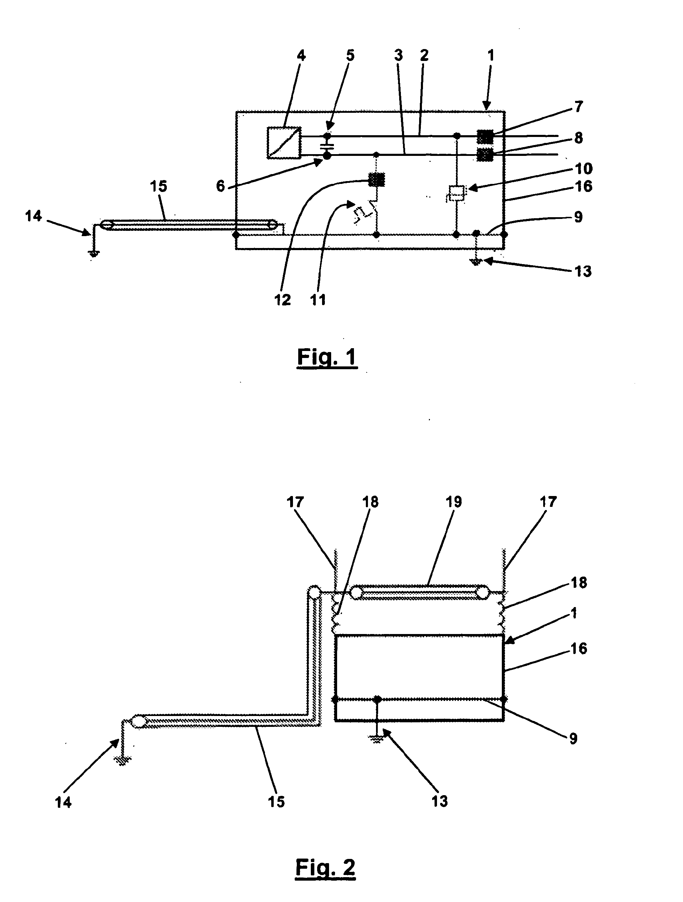

Der in Fig. 1 skizzierte Wechselrichter 1 weist zwei Eingangsleitungen 2 und 3 auf, die zum Anschluss an eine hier nicht dargestellte Gleichstrom- und/oder Gleichspannungsquelle vorgesehen sind und zu einem Wandler 4 des Wechselrichter 1 führen. Bei dem Wandler 4 handelt es sich üblicherweise um einen eingangsseitigen DC/DC-Wandler des Wechselrichters 1. Grundsätzlich kann es sich aber auch direkt um einen DC/AC-Wandler handeln, der eine ausgangsseitige Wechselspannung des Wechselrichters 1 ausgibt. Der Wandler 4 weist einen eingangsseitigen Gleichspannungszwischenkreis 5 mit einer groß dimensionierten Pufferkapazität 6 auf, die zwischen den Eingangsleitungen 2 und 3 wirksam ist. Diese Pufferkapazität ist typischerweise aus einer Vielzahl einzelner Kondensatoren aufgebaut und ist nicht nur absolut groß sondern auch in der Lage hohe Spitzenströme aufzunehmen. In beides Eingangsleitungen 2 und 3 ist eingangsseitig eine Drossel 7 bzw. 8 geschaltet, die vorzugsweise eine Luftdrossel ist, um einerseits zu verhindern, dass hochfrequente Ströme von außen in den Wechselrichter eintreten können und um andererseits auch das Austreten solcher hochfrequenten Ströme, wie sie von Blitzen induziert werden können, aus dem Wechselrichter 1 zu verhindern. Zwischen den Drosseln 7 und 8, die bei dem Wechselrichter 1 grundsätzlich optional sind, und dem Gleichspannungszwischenkreis 5 ist zwischen die Eingangsleitung 2 und eine geerdete Potentialausgleichsschiene 9 des Wechselrichters 1 ein Überspannungsableiter 10 geschaltet, der die Form eines Varistors von dem Typ hat, der bei Überlastung kontrolliert in einen niederohmigen Zustand übergeht. Demgegenüber ist zwischen die andere Eingangsleitung 3 und die Potentialausgleichsschiene 9 ein GFDI (Ground Fault Detector and Interrupter) 11 in Reihe mit einer Luftdrossel 12 geschaltet. Die Luftdrossel 12 verhindert die Belastung des GFDI 11 mit hochfrequenten Strömen bzw. schnellen Stromanstiegen. Der GFDI 11 dient zur Verbindung der Eingangsleitung 3 mit Erdpotential und zur gleichzeitigen Überwachung von Erdfehlern, wobei im Falle eines auftretenden Erdfehlers die Erdverbindung der Erdleitung 3 über den GFDI 11 mit der Potentialsammelschiene 9 automatisch unterbrochen wird. Man spricht dabei von dem Fallen des GFDI 11. Der GFDI zeigt ein solches Fallen nach außen an, wobei der GFDI an eine nach außen berichtende Fehlermeldeeinrichtung (hier nicht dargestellt) angeschlossen sein kann. Die Potentialsammelschiene 9 ist über eine erste lokale Erdungsanlage 13 und eine zweite remote Erdungsanlage 14 mit Erde verbunden. Dabei ist die zweite entfernte Erdungsanlage 14 über eine etwa 20 m lange hochspannungsisolierte Leitung 15 an die Potentialsammelschiene 9 angeschlossen, die aufgrund ihres geringen Wellenwiderstands für hochfrequente Ströme einen bevorzugten Ableitweg für Blitzströme darstellt. Dies hat den Vorteil, dass diese Blitzströme entfernt von dem Wechselrichter 1 nach Erde abfließen und so allenfalls zu geringen Anteilen in die Eingangsleitungen 2, 3 einkoppeln. Im Falle einer Überspannung auf der Eingangsleitung 2, wie sie beispielsweise durch einen Blitz hervorgerufen werden kann, fließt diese als Strom über den Überspannungsableiter 10 zu der Potentialsammelschiene 9 und von dort nach Erde ab. Für den Fall, dass der den Überspannungsableiter 10 ausbildende Varistor durch die aufgetretene Überspannung überlastet wurde und damit dauerhaft niederohmig geworden ist, wird durch das Fallen des GFDI ein Kurzschluss zwischen den beiden Eingangsleitungen 2 und 3 über die Potentialsammelschiene 9 vermieden. Zudem kann die Fehlermeldeeinrichtung des GFDI genutzt werden, um das Auftreten der Überspannung nach außen anzuzeigen. Wenn eine blitzinduzierte Überspannung auf der Eingangsleitung 3 vorliegt, kann sie aufgrund der großen Pufferkapazität 6 des Gleichspannungszwischenkreises 5 und, weil es sich um ein hochfrequentes Ereignis handelt, bei dem die Pufferkapazität 6 einen geringen Wechselstromwiderstand aufweist, durch Ströme von der Eingangsleitung 2 ausgeglichen werden. Resultierende Überspannungen auf der Eingangsleitung 2 können wie bereits beschrieben über den Überspannungsableiter 10 und die Potentialsammelschiene 9 nach Erde abfließen. Auch hierbei fällt dann der GFDI 11. Ein metallisches Gehäuse 16 des Wechselrichters 1 ist ebenfalls an die Potentialsammelschiene 9 angeschlossen. Soweit Überspannungen an dem Gehäuse auftreten, werden diese insbesondere über die hochspannungsisolierte Anschlussleitung 15 und die zweite Erdungsanlage 14 abgeleitet, ohne Schaden anzurichten.

Fig. 2 skizziert die Möglichkeit, zusätzliche Blitzfangstangen 17 über dem Gehäuse 16 des Wechselrichters 1 anzuordnen, um über diese auftretenden Blitze abzuleiten. Die Blitzfangstangen 17 weisen Hochspannungsisolierungen 18 gegenüber dem Gehäuse 16 auf. Sie sind untereinander durch eine hochspannungsisolierte Leitung 19 und mit der zweiten Erdungsanlage 14 über die hochspannungsisolierte Anschlussleitung 15 verbunden. Entsprechend ist die Anschlussleitung 15 hier nicht an die Potentialsammelschiene 9 des Wechselrichters 1 angeschlossen. Mit dieser Anordnung gemäß Fig. 2 wird erreicht, dass auftretende Blitze möglichst ohne Einkoppeln von Teilströmen in den Wechselrichter 1 nach Erde abgeleitet werden.

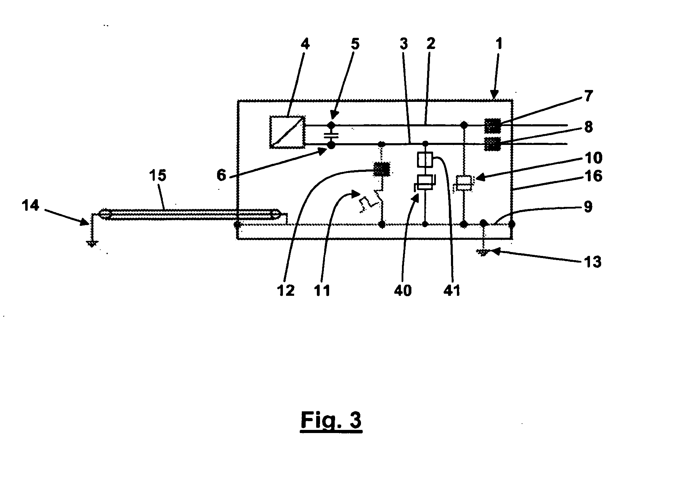

Bei der in Fig. 3 dargestellten Ausführungsform des Wechselrichters 1 ist neben dem Überspannungsableiter 10 zwischen der Eingangsleitung 2, deren Isolationszustand gegenüber der Potentialsammelschiene 9 mit dem GFDI 11 überwacht wird, ein weiterer Überspannungsableiter 40 vorgesehen, und zwar zwischen der Eingangsleitung 3, an die der GFDI 11 angeschlossen ist, und der Potentialsammelschiene 9, d. h. parallel zu dem GFDI 11. Diesem weiteren Überspannungsableiter 40, der wie der Überspannungsableiter 10 ein Varistor des bei Überlastung niederohmig werdenden Typs ist, aber auf funkstreckenbasiert sein kann, ist eine Sicherung 41 in Reihe geschaltet. Das heißt, der Überspannungsableiter 40 ist durch die Sicherung 41, die eine Schmelzsicherung oder auch ein Sicherungsautomat sein kann, abgesichert. So verhindert die Sicherung 41. dass nach einer Überlastung des Überspannungsableiters 40 ein größerer Strom durch den Überspannungsableiter 40 fließt, bei dem es sich um einen Kurzschlussstrom zwischen den beiden Eingangsleitungen 2 und 3 handeln kann, der über die Potentialausgleichsschiene 9 und den ebenfalls überlasteten und dadurch niedrigohmig gewordenen, aber nicht abgesicherten Überspannungsableiter 10 fließt. Im Normalfall, d. h. vor jeder Überlastung, stellt der zusätzliche Überspannungsableiter 40 mit der in Reihe geschalteten Sicherung 41 einen zusätzlichen Ableitpfad für Überspannungen von der Eingangsleitung 3 zu der Potentialsammelschiene 9 bereit.

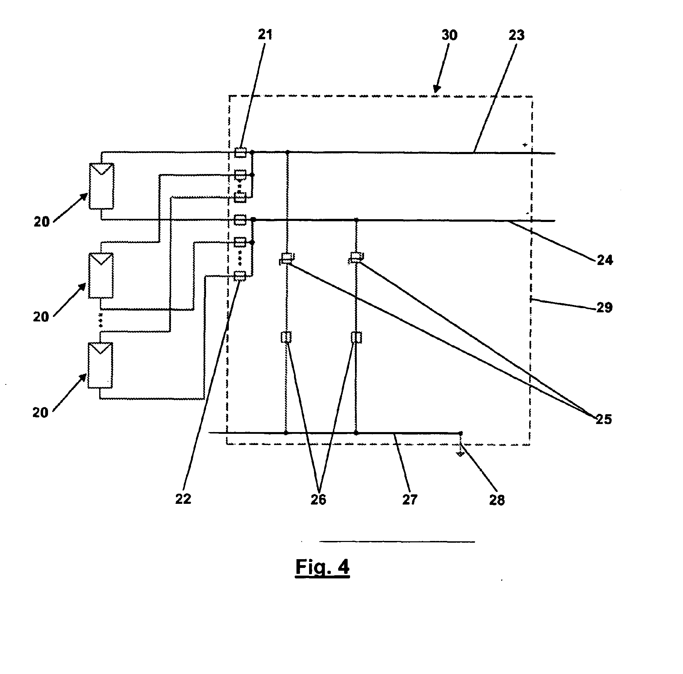

Fig. 4 skizziert mehrere Photovoltaikgeneratoren 20, die gemeinsam eine Gleichstrom- und Gleichspannungsquelle zum Anschluss an den Wechselrichter 1 gemäß Fig. 1, 2 oder 3 ausbilden. Jeder dieser Photovoltaikgeneratoren 20 kann ein sogenannter String, d. h. eine Reihenschaltung von einzelnen Photovoltaikzellen sein und darüber hinaus auch eine Parallelschaltung mehrerer solcher Strings aufweisen. Jeder der Photovoltaikgeneratoren ist über Schmelzsicherungen 21 und 22 separat abgesichert, wobei nur eine dieser beiden Schmelzsicherungen je Photovoltaikgenerator 20 erforderlich ist. Über die Schmelzsicherungen 21 und 22 sind die Photovoltaikgeneratoren 20 mit Leitungen 23 und 24 verbunden, die als Stromsammelschienen für die Photovoltaikgeneratoren 20 dienen. Jede der Leitungen 23 und 24 ist über einen Varistor des Typs, der bei Überlastung kontrolliert niederohmig wird, als Überspannungsableiter 25 und eine mit dem Überspannungsableiter 25 in Reihe geschaltete Sicherung 26 in Form einer Schmelzsicherung oder eines Sicherungsautomaten mit einer Potentialsammelschiene 27 verbunden, die an eine Erdungsanlage 28 angeschlossen ist. Dabei können alle mit einer gestrichelten Linie 29 umgebenen Teile in dem Gehäuse einer Stromsammeleinrichtung 30 angeordnet sein. Die Überspannungsableiter 25 erlauben das Abfließen von Überspannungen von den Leitungen 23 und 24 zu der Potentialsammelschiene 27 und damit nach Erde. Die Sicherungen 26 behindern diese Ableitung nicht. Sie lösen aber bei drohender Überlastung oder spätestens bei erfolgter Überlastung der Überspannungsableiter 25 und einem damit verbundenen Kurzschluss zwischen den Leitungen 23 und 24 aus und beenden damit diesen Kurzschluss. Wenn beide Sicherungen 26 auslösen, wird auch der Erdschluss beider Leitungen 23 und 24 aufgehoben. Die Sicherungen 26 können einen Meldekontakt aufweise, der nach extern anzeigt, dass der Überspannungsschutz wegen der ausgelösten Sicherungen 26 nicht mehr wirksam ist.

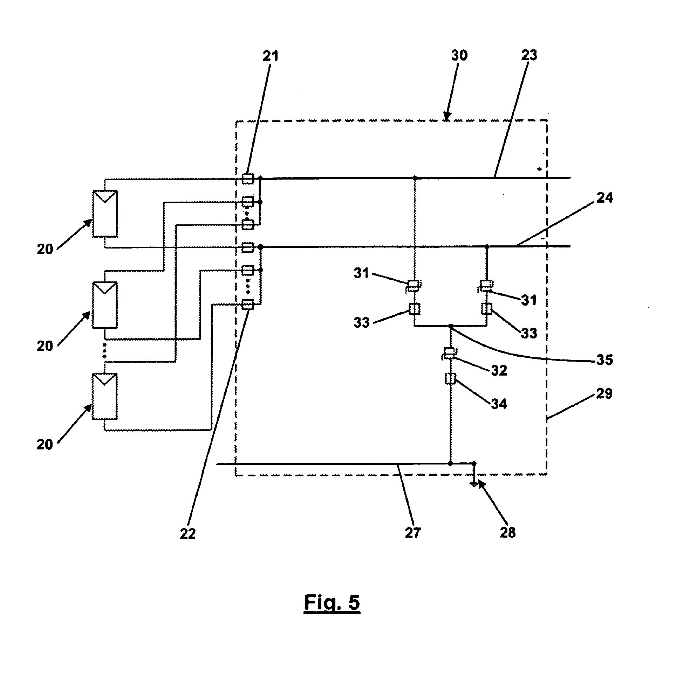

Gemäß Fig. 5 sind statt zwei Überspannungsableitern 25 und zwei Sicherungen 26 insgesamt drei Überspannungsableiter 31 und 32 mit zugeordneten, d. h. mit ihnen in Reihe geschalteten Sicherungen 33 und 34 vorgesehen. Dabei sind alle Überspannungsableiter 31 und 32 auch hier vorzugsweise Varistoren des bei Überlastung niedrigohmig werdenden Typs, und die Sicherungen 33 und 34 können Schmelzsicherungen oder Sicherungsautomaten sein. Die Überspannungsableiter 31 sind mit den Sicherungen 33 zwischen den Leitungen 23 und 24 in Reihe geschaltet; und ihr Mittelpunkt 35 ist über den Überspannungsableiter 32 und die Sicherung 34 mit der Potentialsammelschiene 27 verbunden. So liegen zwischen allen elektrisch relevanten Punkten immer zwei in Reihe geschaltete Überspannungsableiter 31 oder 31 und 32 vor. D. h. die hier im Normalbetrieb auftretenden Spannungen werden auf zwei Überspannungsableiter 31 bzw. 32 aufgeteilt. Jeder der Überspannungsableiter kann daher kleiner dimensioniert und entsprechend kleiner bauend sowie kostengünstiger ausgeführt sein. Von den in Fig. 5 gezeigten drei Sicherungen 33 und 34 könnte die Sicherung 34 und/oder eine der Sicherungen 33 entfallen, ohne dass die Funktion des Blitzschutzes hierdurch beeinträchtigt würde.

### BEZUGSZEICHENLISTE

- 1: Wechselrichter
- 2: Eingangsleitung
- 3: Eingangsleitung
- 4: Wandler
- 5: Gleichspannungszwischenkreis
- 6: Pufferkapazität
- 7: Drossel
- 8: Drossel
- 9: Potentialausgleichsschiene
- 10: Überspannungsableiter
- 11: GFDI
- 12: Drossel
- 13: Erdungsanlage
- 14: Erdungsanlage
- 15: Anschlussleitung
- 16: Gehäuse
- 17: Blitzfangstange
- 18: Hochspannungsisolierung
- 19: Verbindungsleitung
- 20: Photovoltaikgenerator
- 21: Schmelzsicherung
- 22: Schmelzsicherung
- 23: Leitung
- 24: Leitung
- 25: Überspannungsableiter
- 26: Schmelzsicherung
- 27: Potentialausgleichschiene
- 28: Erdungsanlage
- 29: Linie
- 30: Stromsammeleinrichtung
- 31: Überspannungsableiter
- 32: Überspannungsableiter
- 33: Sicherung
- 34: Sicherung
- 35: Mittelpunkt

- 40: Überspannungsableiter
- 41: Sicherung

## Patentansprüche

1. Wechselrichter (1) mit einem Paar von Eingangsleitungen (2, 3) zum Anschluss an eine Gleichstrom- und/oder Gleichspannungsquelle, mit einer zwischen den Eingangsleitungen (2, 3) wirksamen Pufferkapazität (6), mit einer Potentialausgleichsschiene (9) zum Anschluss an mindestens eine Erdungsanlage (13), mit einer Isolationsüberwachungseinrichtung für die Überwachung der Isolation mindestens einer der Eingangsleitungen (2, 3) gegenüber der Potentialausgleichsschiene (9) und mit einer Überspannungsableiteinrichtung für die Ableitung von Überspannungen von den Eingangsleitungen (2, 3) auf die Potentialausgleichsschiene (9), die mindestens einen Überspannungsableiter (10) aufweist, **dadurch gekennzeichnet, dass** der mindestens eine Überspannungsableiter (10) der Überspannungsableiteinrichtung zwischen die mindestens eine Eingangsleitung (2), deren Isolation gegenüber der Potentialausgleichsschiene (9) von der Isolationsüberwachungseinrichtung überwacht wird, und die Potentialausgleichsschiene (9) geschaltet ist, ohne dass ihm eine Sicherung in Reihe geschaltet ist, während jedem zwischen die andere Eingangsleitung (3) und die Potentialausgleichsschiene (9) geschalteten Überspannungsableiter (40) der Überspannungsableiteinrichtung, soweit dieser vorhanden ist, eine Sicherung (41) in Reihe geschaltet ist.

2. Wechselrichter (1) nach Anspruch 1, **dadurch gekennzeichnet, dass** die Isolationsüberwachungseinrichtung einen zwischen die andere Eingangsleitung (3) und die Potentialausgleichsschiene (9) geschalteten GFDI (11) aufweist.

3. Wechselrichter (1) nach Anspruch 1 oder 2, **dadurch gekennzeichnet, dass** die Überspannungsableiteinrichtung nicht mehr als den mindestens einen Überspannungsableiter (10) aufweist.

4. Wechselrichter (1) nach mindestens einem der vorhergehenden Ansprüche, **dadurch gekennzeichnet, dass** jeder Überspannungsableiter (10, 40) ein Varistor insbesondere von einem solchen Typ ist, der bei Überlastung in einen niederohmigen Zustand übergeht.

5. Wechselrichter (1) nach mindestens einem der vorhergehenden Ansprüche 1 und 2, **dadurch gekennzeichnet, dass** jeder Überspannungsableiter (10, 40) funkstreckenbasiert ist.

6. Wechselrichter (1) nach Anspruch 2, **dadurch gekennzeichnet, dass** der GFDI (11) mit einer Drossel (12) in Reihe geschaltet ist.

7. Wechselrichter (1) nach Anspruch 2 oder 6, **dadurch gekennzeichnet, dass** der GFDI (11) an einer Fehlermeldeeinrichtung angeschlossen ist.

8. Wechselrichter (1) nach Anspruch 2, 6 oder 7, **dadurch gekennzeichnet, dass** der GFDI (11) motorisch rücksetzbar ist.

9. Wechselrichter (1) nach mindestens einem der vorhergehenden Ansprüche, **dadurch gekennzeichnet, dass** die Eingangsleitungen (2, 3) eingangsseitige Drosseln (7, 8) aufweisen.

10. Wechselrichter (1) nach mindestens einem der vorhergehenden Ansprüche, **dadurch gekennzeichnet, dass** ein metallisches Gehäuse (16) des Wechselrichters (1) an die Potentialausgleichsschiene (9) angeschlossen ist.

11. Wechselrichter (1) nach mindestens einem der vorhergehenden Ansprüche, **dadurch gekennzeichnet, dass** mindestens eine hochspannungsisolierte Anschlussleitung (15) zum Anschließen der Potentialausgleichsschiene (9) oder mindestens einer Blitzfangstange (17) an mindestens eine weitere Erdungsanlage (14) vorgesehen ist.

12. Wechselrichter (1) nach Anspruch 11, **dadurch gekennzeichnet, dass** die Anschlussleitung (15) 10 bis 30 m lang ist.

13. Solaranlage mit mindestens einem Wechselrichter (1) nach mindestens einem der vorhergehenden Ansprüche, **dadurch gekennzeichnet, dass** Leitungen (23, 24), die Gleichstrom von mehreren Photovoltaikgeneratoren (20) zu den Eingangsleitungen (2, 3) des Wechselrichters (1) führen, in von dem Wechselrichter (1) entfernten Stromsammeleinrichtungen (30) über jeweils mindestens einen Varistor (25, 31, 32) als Spannungsableiter an eine geerdete Potentialausgleichsschiene (27) der Stromsammeleinrichtung (30) angeschlossen sind, wobei jeder Varistor (25, 31, 32) von einem Typ ist, der bei Überlastung in einen niederohmigen Zustand übergeht, und wobei mit mindestens einem der Varistoren (25, 31, 32) eine Sicherung (26, 33, 34) in Reihe geschaltet ist.

14. Solaranlage nach Anspruch 13, **dadurch gekennzeichnet, dass** die den Gleichstrom paarweise führenden Leitungen (23, 24) über je einen Varistor (31) an einen Zwischenpunkt (35) angeschlossen sind, wobei die Sicherung (33) mit mindestens einem dieser Varistoren (31) in Reihe geschaltet ist, und dass der Zwischenpunkt (35) über mindestens einen weiteren Varistor (32) an die Potentialausgleichsschiene (27) der Stromsammeleinrichtung (30) angeschlossen ist.

15. Solaranlage nach Anspruch 13 oder 14, **dadurch gekennzeichnet, dass** zwischen jede den Gleichstrom führende Leitung (23, 24) und die Potentialausgleichsschiene (27) der Stromsammeleinrichtung (30) mindestens eine Sicherung (26, 33, 34) mit einem der Varistoren (25, 31, 32) in Reihe geschaltet ist.

## Claims

1. Inverter (1) comprising a pair of input lines (2, 3) for connection to an AC current and/or AC voltage source, a buffer capacitance (6) operative between the input lines (2, 3), a potential equalization busbar (9) for connection to at least one grounding device (13), an isolation monitoring device for monitoring the isolation of at least one of the input lines (2, 3) with regard to the potential equalization busbar (9), and an overvoltage eliminating device for draining overvoltages from the input lines (2, 3) to the potential equalization busbar (9), which comprises at least one overvoltage eliminator (10), **characterized in that** the at least one overvoltage eliminator (10) of the overvoltage eliminating device is connected between the at least one input line (2), whose isolation with regard to the potential equalization busbar (9) is monitored by the isolation monitoring device, and the potential equalization busbar (9) without any fuse being connected in series with the at least one overvoltage eliminator (10), whereas a fuse (41) is connected in series with any overvoltage eliminator (40) of the overvoltage eliminating device that is connected between the other input line (3) and the potential equalization busbar (9).

2. Inverter (1) according to claim 1, **characterized in that** the isolation monitoring device comprises a GFDI (11) connected between the other input line (3) and the potential equalization busbar (9).

3. Inverter (1) according to claim 1 or 2, **characterized in that** the overvoltage eliminating device only comprise the at least one overvoltage eliminator (10).

4. Inverter (1) according to any of the preceding claims, **characterized in that** each overvoltage eliminator (10, 40) is a varistor, particularly of that type that becomes permanently low-ohmic upon being overloaded.

5. Inverter (1) according to at least any of the preceding claims 1 and 2, **characterized in that** each overvoltage eliminator (10, 40) comprises a spark gap.

6. Inverter (1) according to claim 2, **characterized in that** the GFDI (11) is connected in series with an inductor (12).

7. Inverter (1) according to claim 2 or 6, **characterized in that** GFDI (11) is connected to a fault signalling device.

8. Inverter (1) according to claim 2, 6 or 7, **characterized in that** the GFDI (11) can be reset by motor.

9. Inverter (1) according to at least one of the preceding claims, **characterized in that** the input lines (2, 3) comprise inductors (7, 8) at their input ends.

10. Inverter (1) according to at least one of the preceding claims, **characterized in that** a metallic housing (16) of the inverter (1) is connected to the potential equalization busbar (9).

11. Inverter (1) according to at least one of the preceding claims, **characterized in that** at least one high voltage-isolated connection line (15) is provided for connecting the potential equalization busbar (9) or at least one lightning catching rod (17) to at least one further grounding device (14).

12. Inverter (1) according to claim 11, **characterized in that** the connection line (15) has a length of 10 to 30 m.

13. Solar plant comprising at least one inverter (1) according to at least one of the preceding claims, **characterized in that**, in current collecting devices (20) remote from the inverter (1), lines (23, 24) that lead DC current from several photovoltaic generators (20) to the input lines (2, 3) of the inverter (1) are each connected to a grounded potential equalization busbar (27) of the respective current collecting device (30) via at least one varistor (25, 31, 32) serving as an overvoltage eliminator, wherein each varistor (25, 31, 32) is of that type that becomes low-ohmic upon being overloaded, and wherein a fuse (26, 33, 34) is connected in series with at least one of the varistors (25, 31, 32).

14. Solar plant according to claim 13, **characterized in that** the lines (23, 24) leading the direct current in pair are each connected to an intermediate point (35) via a varistor (31), wherein the fuse (33) is connected in series with at least one of these varistors (31), and that the intermediate point (35) is connected to the potential equalization busbar (27) of the current collecting device (30) via at least one further varistor (32).

15. Solar plant according to claim 13 or 14, **characterized in that**, between each line (23, 24) leading the direct current and the potential equalization busbar (27) of the current collection device (30), at least one fuse (26, 33, 34) is connected in series with one of the varistors (25, 31, 32).

## Revendications

1. Onduleur (1) comportant une paire de conduites d'entrée (2, 3) pour le raccordement à une source de courant continu et/ou de tension continue, une capacité tampon (6) active entre les conduites d'entrée (2, 3), un rail de compensation de potentiel (9) pour le raccordement à au moins une installation de mise à la terre (13), un dispositif de surveillance de l'isolation pour la surveillance de l'isolation d'au moins l'une des conduites d'entrée (2, 3) vis-à-vis du rail de compensation de potentiel (9) et un dispositif de déviation de la surtension pour dévier les surtensions des conduites d'entrée (2, 3) vers le rail de compensation de potentiel (9), dispositif qui présente au moins un parafoudre (10), **caractérisé en ce que** le ou les parafoudre(s) (10) du dispositif de déviation de la surtension est/sont monté(s) entre la ou les conduite(s) d'entrée (2), dont l'isolation vis-à-vis du rail de compensation de potentiel (9) est surveillée par le dispositif de surveillance de l'isolation, et le rail de compensation de potentiel (9) sans qu'un fusible ne soit monté en série pour le parafoudre tandis que chaque parafoudre (40) du dispositif de déviation de la surtension, monté entre l'autre conduite d'entrée (3) et le rail de compensation de potentiel (9), a un fusible (41) monté en série dans la mesure où ce parafoudre est installé.

2. Onduleur (1) selon la revendication 1, **caractérisé en ce que** le dispositif de surveillance de l'isolation comprend un interrupteur GFDI (11) monté entre l'autre conduite d'entrée (3) et le rail de compensation de potentiel (9).

3. Onduleur (1) selon la revendication 1 ou 2, **caractérisé en ce que** le dispositif de déviation de la surtension ne comporte pas plus du parafoudre minimal (10).

4. Onduleur (1) selon au moins l'une quelconque des revendications précédentes, **caractérisé en ce que** chaque parafoudre (10, 40) est une varistance, en particulier d'un type qui passe à un état de faible impédance en cas de surcharge.

5. Onduleur (1) selon au moins l'une quelconque des revendications précédentes 1 et 2, **caractérisé en ce que** chaque parafoudre (10, 40) fonctionne sur la base des faisceaux hertziens.

6. Onduleur (1) selon la revendication 2, **caractérisé en ce que** l'interrupteur GFDI (11) est monté en série avec une bobine d'inductance (12).

7. Onduleur (1) selon la revendication 2 ou 6, **caractérisé en ce que** l'interrupteur GFDI (11) est raccordé à un dispositif de signalisation des erreurs.

8. Onduleur (1) selon la revendication 2, 6 ou 7, **caractérisé en ce que** l'interrupteur GFDI (11) peut être réinitialisé à l'aide d'un moteur.

9. Onduleur (1) selon au moins l'une quelconque des revendications précédentes, **caractérisé en ce que** les conduites d'entrée (2, 3) comportent des bobines d'inductance (7, 8) situées côté entrée.

10. Onduleur (1) selon au moins l'une quelconque des revendications précédentes, **caractérisé en ce qu'**un boîtier métallique (16) de l'onduleur (1) est raccordé au rail de compensation de potentiel (9).

11. Onduleur (1) selon au moins l'une quelconque des revendications précédentes, **caractérisé en ce qu'**on a prévu au moins une conduite de raccordement isolée contre la haute tension (15) pour le raccordement du rail de compensation de potentiel (9) ou au moins d'une barre collectrice (17) à au moins une installation de mise à la terre supplémentaire (14).

12. Onduleur (1) selon la revendication 11, **caractérisé en ce que** la conduite de raccordement (15) a une longueur comprise entre 10 et 30 m.

13. Installation solaire comportant au moins un onduleur (1) selon au moins l'une quelconque des revendications précédentes, **caractérisée en ce que** les conduites (23, 24), qui conduisent le courant continu de plusieurs générateurs photovoltaïques (20) aux conduites d'entrée (2, 3) de l'onduleur (1), sont raccordées, dans les dispositifs de captage du courant (30) situés à distance de l'onduleur (1), par le biais d'au moins une varistance (25, 31, 32) en tant que dérivateur de tension, à un rail de compensation de potentiel mis à la terre (27) du dispositif de captage du courant (30), chaque varistance (25, 31, 32) étant du type qui passe à un état de faible impédance en cas de surcharge et un fusible (26, 33, 34) étant monté en série avec au moins l'une des varistances (25, 31, 32).

14. Installation solaire selon la revendication 13, **caractérisée en ce que** les conduites (23, 24) conduisant le courant continu par paire sont raccordées à un point intermédiaire (35), chacune par le biais d'une varistance (31), le fusible (33) étant monté en série avec au moins l'une de ces varistances (31) et **en ce que** le point intermédiaire (35) est raccordé au rail de compensation de potentiel (27) du dispositif de captage du courant (30) par le biais d'au moins une autre varistance (32).

15. Installation solaire selon la revendication 13 ou 14, **caractérisée en ce qu'**au moins un fusible (26, 33, 34) est monté en série avec l'une des varistances (25, 31, 32) entre chaque conduite (23, 24) conduisant le courant continu et le rail de compensation de potentiel (27) du dispositif de captage du courant (30).
